# EUROPÄISCHE PATENTANMELDUNG

(11) **EP 1 770 001 A2**
(43) Veröffentlichungstag der Anmeldung: **04.04.2007**
(21) Anmeldenummer: 06119213.4
(22) Anmeldetag: 21.08.2006
(51) Int. Cl.: B62D 15/02

(54) **Sensorsystem**

(30) Priorität: 30.09.2005 DE 102005047178
(71) Anmelder: ROBERT BOSCH GMBH, 70442 Stuttgart (DE)
(72) Erfinder: Jaervelaeinen, Tero, 77815, Buehl (DE); Schmitt, Gilles, 67100 Strasbourg (FR)

(57) **Zusammenfassung**

Bei Lenkunterstützungssystemen ist ein Lenkwinkelerfassungssystem mit hoher Auflösung erforderlich. Mechanische Vorrichtungen zum Erfassen der absoluten Drehwinkelstellung können dieser Aufgabe nicht immer gerecht werden. Das Sensorsystem der Erfindung weist ein erstes Sensorelement und ein zweites Sensorelement auf, wobei das erste Sensorelement unabhängig von einer Bordnetzspannung Impulse bei einer Drehbewegung erzeugt. Die daraus erhaltenen Informationen ermöglichen die Errechnung einer absoluten Drehwinkelstellung auch über mehrere Umdrehungen, wobei allerdings nur eine relativ grobe Genauigkeit erreicht wird. Mit einem zweiten Sensorelement, das von einer Bordnetzspannung abhängig ist, kann im gewöhnlichen Betrieb die Auflösung verfeinert werden.

## Beschreibung

Die Erfindung betrifft ein Sensorsystem zum Erfassen eines Drehwinkels. Speziell betrifft die Erfindung ein Lenkwinkelerfassungssystem zur Erfassung eines Lenkwinkels bei einem Kraftfahrzeug.

Aus der DE 100 32 340 A1 ist ein Lenksystem für ein Kraftfahrzeug bekannt, bei dem eine variable Momentenunterstützung des Fahrerlenkwunsches und ein von einem Fahrdynamikregler ausgelöster Eingriff in die Stellung der gelenkten Räder möglich ist. Außerdem können weitere Zusatzfunktionen wie beispielsweise die Spurführung des Fahrzeuges mit oder ohne Kompensation des Lenkgefühls am Lenkrad in das bekannte Lenksystem integriert werden. Das bekannte Lenksystem ist für eine elektrohydraulische Momentenunterstützung oder als rein elektronisches Lenksystem geeignet.

Für ein Lenksystem, wie es aus der DE 100 32 340 A1 bekannt ist, ist die absolute Kenntnis des momentan vorliegenden Lenkwinkels von wesentlicher Bedeutung. Wird der Lenkwinkel unmittelbar am Lenkrad erfasst, dann ist auch über mehrere Lenkradumdrehungen eine eindeutige Zuordnung der momentanen absoluten Lenkwinkelstellung erforderlich. Hierfür kann ein separater Lenkwinkelsensor an der Lenkradsäule angebracht werden, wobei es denkbar ist, dass über zwei Zahnräder mit unterschiedlichen Übersetzungsverhältnissen der absolute Winkel nach dem Noniusverfahren errechnet wird. Bei diesem Verfahren wird die Lenkradstellung über mehrere Umdrehungen mechanisch gespeichert, so dass die Funktionsfähigkeit auch nach einem vorübergehenden Abschalten der Bordnetzspannung, insbesondere dem Abklemmen einer Batterie, wieder hergestellt ist.

Die Erfassung des Lenkwinkels an der Lenkradsäule mit dem beschriebenen mechanischen Verfahren hat den Nachteil, dass die Zahnräder von dem als Hilfsantrieb eingesetzten Elektromotor betätigt werden müssen, so dass der Elektromotor nur mit einer begrenzten Drehgeschwindigkeit betrieben werden kann. Außerdem benötigt der an der Lenkradsäule angebrachte separate Lenkwinkelsensor einen zusätzlichen Bauraum.

Aus der DE 33 17 502 A1 ist ein magnetischer Impulsgeber mit einem Wiegand-Draht bekannt. Der Wiegand-Draht des bekannten Impulsgebers hat eine hartmagnetische Schale und einen weichmagnetischen Kern und ist von einer Sensorspule umgeben, um ein Wiegand-Element zu bilden.

Im Verlauf eines Vorbereitunszyklus werden Schale und Kern des aus der DE 33 17 502 A1 bekannten Wiegand-Drahtes entgegengesetzt magnetisiert. Durch ein von außen einwirkendes Magnetfeld wird der Kern ummagnetisiert, wodurch eine hohe Spannung auftritt, die auch als Wiegand-Impuls bezeichnet wird. Das Nachmagnetisieren von Schale und Kern im Verlauf eines Vorbereitungszyklus kann durch externe Magnete unterschiedlicher Stärke und Richtung bewirkt werden. Das Nachmagnetisieren kann aber auch über die Sensorspule erfolgen, die in Verbindung mit einer Stromsteuerschaltung während des Vorbereitungszyklus als Erregerspule zum Nachmagnetisieren von Schale und Kern des Wiegand-Drahtes dient.

### Vorteile der Erfindung

Das erfindungsgemäße Sensorsystem mit den Merkmalen des Anspruchs 1 und der erfindungsgemäße Lenkantrieb mit den Merkmalen des Anspruchs 10 haben demgegenüber den Vorteil, dass eine Drehwinkelerfassung mit hoher Auflösung möglich ist, wobei das Sensorsystem mit einem Antrieb, insbesondere einem Elektromotor, zu einer mechatronischen Einheit zusammengesetzt werden kann. Insbesondere ist eine Integration des erfindungsgemäßen Sensorsystems in einen Lenkhilfeantrieb möglich. Dabei erfasst das erste Sensorelement eine Drehbewegung des ersten Impulsgebers mit einer Auflösung in der Größenordnung von einem oder mehreren Sektoren des ersten Impulsgebers. Das zweite Sensorelement ermöglicht eine Auflösung, die feiner ist als die Drehwinkelauflösung des ersten Sensorelements, so dass sich in der Zusammenwirkung eine hohe Auflösung ergibt, die eine absolute Drehwinkelstellung auch über mehrere Umdrehungen ermitteln kann.

Es ist anzumerken, dass die Unterscheidung in eine positive Drehrichtung und eine negative Drehrichtung in Bezug auf den jeweiligen Anwendungsfall beliebig vorgegeben werden kann.

Durch die in den Unteransprüchen aufgeführten Maßnahmen sind vorteilhafte Weiterbildungen des im Anspruch 1 angegebenen Sensorsystems und des im Anspruch 10 angegebenen Lenkantriebs möglich.

Das zweite Sensorelement kann als Sensor aus anisotrop magnetoresistiven dünnen NiFe-Schichten ausgebildet sein. Solch ein Sensorelement hat eine große Drehwinkelauflösung von beispielsweise 1° bis 3°, wobei die Position absolut über 180° mechanisch erfasst werden kann.

Vorteilhaft ist es, dass das erste Sensorelement zumindest einen Impulsdraht aufweist, dass eine magnetische Polarität des ersten Sektors des ersten Impulsgebers gleich einer magnetischen Polarität des zweiten Sektors des ersten Impulsgebers ist, dass zwischen dem ersten Sektor des ersten Impulsgebers und dem zweiten Sektor des zweiten Impulsgebers ein dritter Sektor vorgesehen ist, der eine umgekehrte magnetische Polarität zu der magnetischen Polarität des ersten Sektors des ersten Impulsgebers aufweist, und dass der dritte Sektor zum Vorspannen des Impulsdrahtes dient. Ein solcher als Wiegandsensor ausgestalteter Impulsdraht gibt beispielsweise beim magnetischen Nordpol einen Impuls aus, wobei die Polarität des Impulses von der Drehrichtung abhängt. Nach dem Impuls ist eine Rückstellung mit dem magnetischen Südpol erforderlich. Der Impulsdraht kann auch so ausgestaltet sein, dass die Funktionen von Nordpol und Südpol vertauscht sind. Vorzugsweise ist eine Zähleinheit vorgesehen, die die elektrischen Impulse des Impulsdrahtes vorzeichenrichtig erfasst und den momentanen Zählwert in einem Speicherelement speichert.

Ferner ist es vorteilhaft, dass die zum Betrieb der Zähleinheit während eines Zählvorgangs und die von dem Speicherelement benötigte Energie aus dem von dem Impulsdraht erzeugten elektrischen Impuls abgezweigt wird. Das Speicherelement ist dabei vorzugsweise als nicht flüchtiger Speicher ausgestaltet, so dass nur zum Löschen, Einspeichern und/oder Ändern des momentanen Zählwertes eine Versorgung der Speichereinheit mit Energie erforderlich ist. Dadurch ist sichergestellt, dass der momentane Zählwert auch bei abgeschalteter Energieversorgung, insbesondere bei abgeschalteter Bordnetzspannung, zuverlässig gespeichert ist und eine mögliche Änderung des Drehwinkels auch bei abgeschalteter externer Energieversorgung zuverlässig erfasst wird. Speziell ist bei abgeklemmter Batterie ein Drehen des Lenkrads möglich, so dass nach dem Anklemmen der Batterie eine zuverlässige Information über den momentanen absoluten Lenkwinkel erforderlich ist. Eine von der externen Energieversorgung abhängige Recheneinheit kann nach einem Einschalten der Versorgungsspannung den momentanen Zählwert aus der Speichereinheit auslesen und bereits daraus den absoluten Lenkwinkel mit grober Auflösung ermitteln. Zusammen mit der Information des ersten Sensorelements kann die Recheneinheit die absolute Drehwinkelstellung mit feiner Auflösung errechnen.

Der erste Impulsgeber für das erste Sensorelement kann mit der Welle eines Elektromotors oder dergleichen verbunden sein. Vorteilhaft ist es auch, wenn die abwechselnd magnetisierten Rotorpakete des Elektromotors direkt als Impulsgeber für das erste Sensorelement eingesetzt sind.

### Zeichnung

Ein bevorzugtes Ausführungsbeispiel der Erfindung ist in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 einen Lenkantrieb mit einem Sensorsystem in einer auszugsweisen Schnittdarstellung entsprechend einem bevorzugten Ausführungsbeispiel der Erfindung und
Fig. 2 einen schematischen Schaltplan des in Fig. 1 gezeigten Lenkantriebs und des zugehörigen Sensorsystems.

### Beschreibung des Ausführungsbeispiels

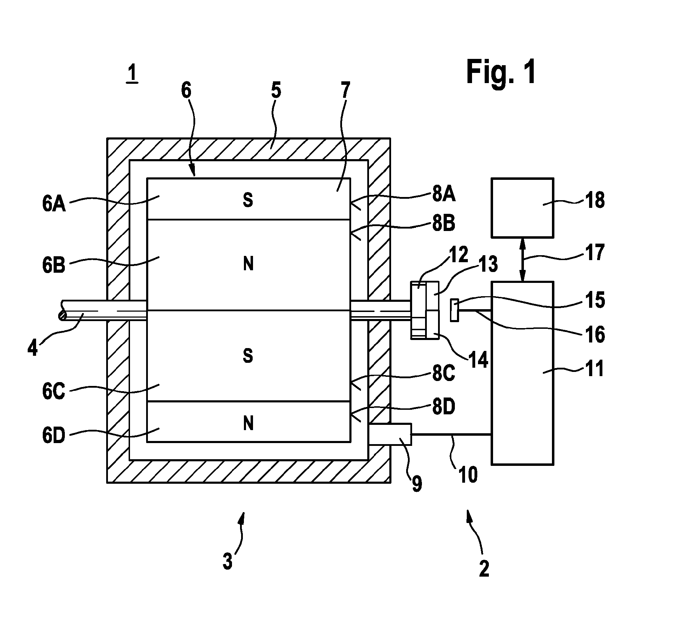

Fig. 1 zeigt ein Ausführungsbeispiel eines Lenkantriebs 1 mit einem Sensorsystem 2 der Erfindung. Der Lenkantrieb 1 kann insbesondere als Antrieb für eine Lenksäule eines Kraftfahrzeugs ausgestaltet sein und ein als Lenkwinkelerfassungssystem ausgestaltetes Sensorsystem 2 aufweisen. Der erfindungsgemäße Lenkantrieb 1 und das erfindungsgemäße Sensorsystem 2 eignen sich jedoch auch für andere Anwendungsfälle.

Der Lenkantrieb 1 weist einen Elektromotor 3 auf, der über eine Welle 4 und ein gegebenenfalls vorgesehenes Getriebe auf ein Lenkrad einwirkt. Der Elektromotor 3 weist einen Stator 5 und einen aus mehreren Rotorpaketen 6A, 6B, 6C, 6D bestehenden Rotor 6 auf, wobei jeweils benachbarte Rotorpakete 6A, 6B, 6C, 6D unterschiedliche magnetische Polaritäten haben, wie es durch die Bezeichnung "N" für Nordpol und "S" für Südpol veranschaulicht ist.

Der Rotor 6 weist einen Seitenbereich auf, der als erster Impulsgeber 7 dient. Durch die Rotorpakete 6A, 6B, 6C, 6D sind Sektoren 8A, 8B, 8C, 8D des ersten Impulsgebers 7 vorgegeben, in denen der erste Impulsgeber 7 entsprechend der magnetischen Polarität der Rotorpakete 6A, 6B, 6C, 6D polarisiert ist. Ferner ist ein erstes Sensorelement 9 vorgesehen, das mit dem ersten Impulsgeber 7 zusammenwirkt. Bei einer Drehung des Rotors 6 laufen die Sektoren 8A, 8B, 8C, 8D an dem ersten Sensorelement 9 vorbei, wodurch das erste Sensorelement 9 elektrische Impulse erzeugt. Hierbei wird beispielsweise durch eine magnetische Polarität "S" eine Vorspannung des ersten Sensorelements 9 erreicht und bei der Polarität "N" ein Impuls erzeugt. Je nach Drehrichtung des Rotors 6 wird ein elektrischer Impuls mit positiver oder negativer elektrischer Spannung erzeugt, der über eine Leitung 10 an einen Schaltkreis 11 übertragen wird.

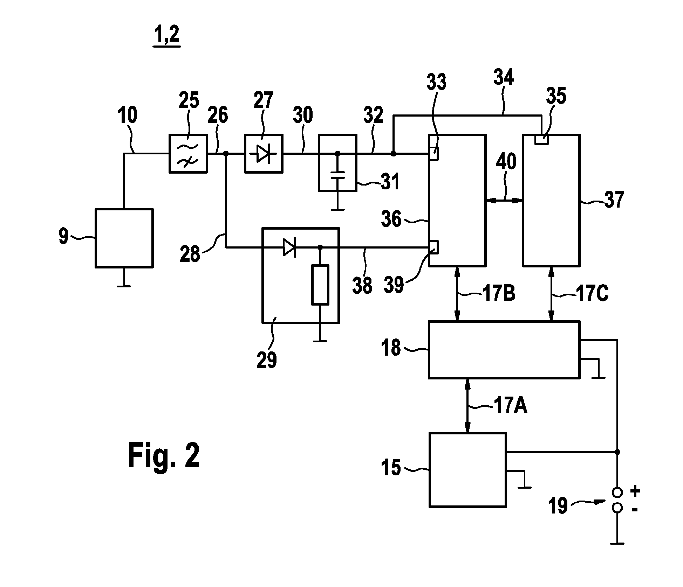

Mit der Welle 4 ist außerdem ein zweiter Impulsgeber 12 verbunden, der beispielsweise aus einem halbkreisförmigen Sektor 13 und einem weiteren halbkreisförmigen Sektor 14 besteht, die unterschiedliche magnetische Polaritäten aufweisen. Ein zweites Sensorelement 15, das als Sensor aus anisotrop magnetoresistiven dünnen NiFe-Schichten ausgestaltet sein kann, erfasst eine Drehstellung des zweiten Impulsgebers 12 oder dessen Drehbewegung, wobei eine hohe Drehwinkelauflösung von beispielsweise 1° bis 3° möglich ist und eine absolute Position über 180° erfasst werden kann. Diese Information gibt das zweite Sensorelement 15 über eine Leitung 16 an den Schaltkreis 11 aus. Der Schaltkreis 11 ist über eine Schnittstelle 17 mit einer beispielsweise als Hauptrechner ausgestalteten Recheneinheit 18 verbunden und wird anhand der Fig. 2 im Detail weiter beschrieben.

Während die Drehwinkelauflösung des zweiten Sensorelements 15 sehr fein ist, liegt die Drehwinkelauflösung des ersten Sensorelements 9 in einer durch die Anzahl der Rotorpakete 6A, 6B, 6C, 6D vorgegebenen Größenordnung. Bei einem Elektromotor 3 mit sechs oder acht Rotorpaketen 6A, 6B, 6C, 6D ergibt sich eine relativ grobe Auflösung. Das erste Sensorelement 9 kann allerdings auch mit einem von dem Rotor 6 separierten ersten Impulsgeber 7 zusammenwirken, der beispielsweise 36 oder 48 Sektoren aufweist, was für eine zuverlässige Erzeugung der Impulse in dem ersten Sensorelement 9 ausreicht. Allerdings ist auch in diesem Fall mit dem zweiten Sensorelement 15 eine feinere Auflösung möglich.

Es ist anzumerken, dass das erste Sensorelement 9 unabhängig von einer externen Versorgungsspannung ist, so dass auch bei einer Drehung des Rotors 6, die durch äußere Einwirkungen bedingt ist, Impulse über die Leitung 10 an den Schaltkreis 11 ausgegeben werden. Demgegenüber ist das zweite Sensorelement 15 von einer externen Energieversorgung abhängig, die beispielsweise über ein Bordnetz, insbesondere eine Batterie und/oder einen Generator, aufgebracht wird. Der Aufbau und die Funktionsweise des Sensorsystems 2 des Lenkantriebs 1 ist im Folgenden anhand der Fig. 2 im Detail weiter beschrieben.

Fig. 2 zeigt einen schematischen Schaltplan zur Erläuterung der Funktionsweise des Sensorsystems 2 des Lenkantriebs 1 gemäß dem Ausführungsbeispiel der Erfindung. Dabei ist neben dem Sensorsystem 2 auch die Recheneinheit 18 dargestellt, die über eine externe Energieversorgung 19, wie beispielsweise ein Bordnetz, mit Energie versorgt wird. Die Energieversorgung 19 dient außerdem zum Versorgen des vereinfacht dargestellten zweiten Sensorelements 15, das über die Schnittstelle 17A mit der Recheneinheit 18 verbunden ist.

Das erste Sensorelement 9 steht mit dem ersten Impulsgeber 7 in Wechselwirkung und gibt bei den beschriebenen Drehbewegungen des Rotors 6, die durch den Betrieb des Elektromotors 3 oder eine externe Einwirkung verursacht sein können, elektrische Impulse mit positiver oder negativer elektrischer Polarität über die Leitung 10 aus. Die über die Leitung 10 übertragenen elektrischen Impulse durchlaufen zunächst ein Hochpassfilter 25, das als RC-Glied oder als ein AC-Koppler, das heißt als ein einfacher Kondensator, ausgebildet sein kann. Das Hochpassfilter 25 ist so abgestimmt, dass die von dem ersten Sensorelement 9 erzeugten Impulse durchgelassen werden, während ein Gleichstromanteil und gegebenenfalls Störsignale ausgefiltert sind. Den gefilterten elektrischen Impuls gibt das Hochpassfilter über eine Leitung 26 an einen Gleichrichter 27 aus, wobei von der Leitung 26 eine Leitung 28 abzweigt, die zu einer Polaritätserfassungseinheit 29 führt. Der Gleichrichter 27 dient zum Gleichrichten des elektrischen Impulses mit positiver oder negativer Spannung in einen Impuls mit positiver Spannung, der über die Leitung 30 ausgegeben wird. Der Gleichrichter 27 ist über die Leitung 30 mit einem Energiespeicher 31 verbunden, der die Energie von einem elektrischen Impuls speichern kann und insbesondere zur Glättung der durch den elektrischen Impuls vermittelten pulsförmigen Ausgangsspannung des Gleichrichters 27 dient. Der Energiespeicher 31 kann beispielsweise einen entsprechend dimensionierten Kondensator aufweisen. Der Energiespeicher ist über eine Leitung 32 mit einem Versorgungsspannungseingang 33 einer Zähleinheit 36 verbunden. Ferner zweigt von der Leitung 32 eine Leitung 34 ab, über die der Energiespeicher 31 mit einem Versorgungsspannungseingang 35 eines Speicherelements 37 verbunden ist. Von einer Energie des über die Leitung 26 ausgegebenen elektrischen Impulses wird dadurch ein Teil abgezweigt, der zur elektrischen Versorgung der Zähleinheit 36 und des Speicherelements 37 verwendet werden kann. Im gewöhnlichen Betrieb des Sensorsystems 2 des Lenkantriebs 1, bei dem eine Bordnetzspannung zur Verfügung steht, ist auch eine alternative oder zusätzliche Versorgung der Zähleinheit 36 und des Speicherelements 37 möglich, wobei die Versorgungsspannungseingänge 33, 35 als Triggereingänge 33, 35 dienen.

Die Polaritätserfassungseinheit 29 erfasst die Polarität des über die Leitung 28 übertragenen, gefilterten elektrischen Impulses und gibt über die Leitung 38 eine positive Spannung oberhalb eines gewissen Schwellwertes aus, wenn die elektrische Polarität des Impulses positiv ist, und gibt über die Leitung 38 eine elektrische Spannung unterhalb des Schwellwertes, insbesondere 0 V, aus, wenn die elektrische Polarität des Impulses negativ ist. Die Polaritätserfassungseinheit 29 ist in der Fig. 2 vereinfacht durch eine Diode und einen nachgeordneten auf Masse geschalteten elektrischen Widerstand dargestellt. Über die Leitung 38 ist die Polaritätserfassungseinheit 29 mit einem Zählrichtungseingang 39 der Zähleinheit 36 verbunden. Ferner ist die Zähleinheit 36 mit dem Speicherelement 37 über eine Schnittstelle 40 verbunden. Beim Erfassen eines Spannungsimpulses über den Versorgungsspannungseingang 33 wird die Zähleinheit 36 aufgeweckt und die am Zählrichtungseingang 39 anliegende Spannung erfasst. Gleichzeitig wird auch das Speicherelement 37 aufgeweckt, das einen momentanen Zählwert speichert. In Abhängigkeit von der durch die Spannung am Zählrichtungseingang 39 gegebenen Zählrichtung befiehlt die Zähleinheit 36 über die Schnittstelle 40 eine Erhöhung oder eine Verringerung des im Speicherelement 37 gespeicherten momentanen Zählwerts um vorzugsweise eine Einheit. Die über den Versorgungsspannungseingang 33 und den Versorgungsspannungseingang 35 von dem Energiespeicher 31 übertragenen Energieimpulse dienen dabei sowohl zur Taktgebung als auch zur Versorgung der Zähleinheit 36 und des Speicherelements 37.

Die Zähleinheit 36 steht über die Schnittstelle 17B mit der Recheneinheit 18 in Verbindung. Ferner steht das Speicherelement 37 über die Schnittstelle 17C mit der Recheneinheit 18 in Verbindung. Die Recheneinheit 18 kann dadurch sowohl die einzelnen Zählvorgänge der Zähleinheit 36 und die jeweilige Zählrichtung als auch den momentanen, im Speicherelement 37 gespeicherten Zählwert zur Berechnung des momentanen, absoluten Drehwinkels erhalten. Die Berechnung des momentanen, absoluten Drehwinkels kann zusammen mit den über die Schnittstelle 17A des zweiten Sensorelements 15 erhaltenen Daten mit einer hohen Drehwinkelauflösung erfolgen. Beispielsweise kann über den im Speicherelement 37 gespeicherten momentanen Zählwert die absolute Drehwinkelstellung über mehrere Umdrehungen und mit einer Auflösung von 180° oder weniger ermittelt werden. Über das zweite Sensorelement 15 ist dann eine Feinauflösung innerhalb dieses Bereichs von 180° oder weniger möglich.

Die Erfindung ist nicht auf das beschriebene Ausführungsbeispiel beschränkt.

## Patentansprüche

1. Sensorsystem (2), insbesondere Lenkwinkelerfassungssystem zur Erfassung eines Lenkwinkels, mit einem ersten Sensorelement (9), zumindest einem zweiten Sensorelement (15), einem ersten Impulsgeber (7) und zumindest einem zweiten Impulsgeber (12), wobei der erste Impulsgeber (7) einen ersten Sektor (8A) und zumindest einen zweiten Sektor (8C) aufweist, wobei das erste Sensorelement (9) ausgestaltet ist zum Erfassen einer Drehbewegung des ersten Impulsgebers (7) und eine Drehbewegung von dem ersten Sektor (8A) des ersten Impulsgebers (7) zu dem zweiten Sektor (8C) des ersten Impulsgebers (7) als einen Übergang in einer positiven Drehrichtung erfasst und eine Drehbewegung von dem zweiten Sektor (8C) des ersten Impulsgebers (7) zu dem ersten Sektor (8A) des ersten Impulsgebers (7) als einen Übergang in einer negativen Drehrichtung erfasst, wobei das zweite Sensorelement (15) ausgestaltet ist zum Erfassen einer Drehbewegung und/oder Drehstellung des zweiten Impulsgebers (12) und eine Drehwinkelauflösung ermöglicht, die feiner ist als eine Drehwinkelauflösung des ersten Sensorelements (9).

2. Sensorsystem nach Anspruch 1,
**dadurch gekennzeichnet,**
**dass** das zweite Sensorelement (15) als Sensor aus anisotrop magnetoresistiven dünnen NiFe-Schichten ausgebildet ist.

3. Sensorsystem nach Anspruch 1 oder 2,
**dadurch gekennzeichnet,**
**dass** das erste Sensorelement (9) zumindest einen Impulsdraht aufweist, dass eine magnetische Polarität des ersten Sektors (8A) des ersten Impulsgebers (7) gleich einer magnetischen Polarität des zweiten Sektors (8C) des ersten Impulsgebers (7) ist, dass zwischen dem ersten Sektor (8A) des ersten Impulsgebers (7) und dem zweiten Sektor (8C) des ersten Impulsgebers (7) ein dritter Sektor (8B) vorgesehen ist, der eine umgekehrte magnetische Polarität zu der magnetischen Polarität des ersten Sektors (8A) des ersten Impulsgebers (7) aufweist, und dass der dritte Sektor (8B) zum Vorspannen des Impulsdrahtes dient.

4. Sensorsystem nach Anspruch 3,
**dadurch gekennzeichnet,**
**dass** der Impulsdraht bei einem Übergang von dem dritten Sektor (8B) auf den ersten Sektor (8A) einen elektrischen Impuls mit einer positiven Polarität erzeugt und bei einem Übergang von dem dritten Sektor (8B) auf den zweiten Sektor (8C) einen elektrischen Impuls mit negativer Polarität erzeugt.

5. Sensorsystem nach einem der Ansprüche 1 bis 4,
**dadurch gekennzeichnet,**
**dass** das erste Sensorelement bei der Erfassung eines Übergangs einen elektrischen Impuls erzeugt, wobei die Polarität des erzeugten elektrischen Impulses von der erfassten Drehrichtung abhängt, dass eine Zähleinheit (36) vorgesehen ist, die ausgestaltet ist zum Erfassen von elektrischen Impulsen des ersten Sensorelements (9), und dass die zum Betrieb der Zähleinheit (36) während eines Zählvorgangs benötigte Energie zumindest teilweise aus dem erzeugten elektrischen Impuls abgezweigt ist.

6. Sensorsystem nach Anspruch 5,
**dadurch gekennzeichnet,**
**dass** ein Speicherelement (37) vorgesehen ist, das ausgestaltet ist zum Speichern eines momentanen Zählwerts, dass die Zähleinheit (36) den in dem Speicherelement (37) gespeicherten momentanen Zählwert beim Erfassen zumindest eines elektrischen Impulses in Abhängigkeit von der Polarität des von dem ersten Sensorelements (9) erzeugten elektrischen Impulses erhöht oder verringert und dass die von dem Speicherelement zumindest zum Löschen, Einspeichern und/oder Ändern des momentanen Zählwerts benötigte Energie zumindest teilweise aus dem erzeugten elektrischen Impuls abgezweigt ist.

7. Sensorsystem nach Anspruch 6,
**dadurch gekennzeichnet,**
**dass** eine Recheneinheit (18) vorgesehen ist, die von einer Versorgungsspannung abhängig ist, und dass die Recheneinheit (18) nach einem Einschalten der Versorgungsspannung den momentanen Zählwert aus dem Speicherelement (37) ausliest.

8. Sensorsystem nach Anspruch 7,
**dadurch gekennzeichnet, dass** das zweite Sensorelement (2) von der Versorgungsspannung abhängig ist und bei eingeschalteter Versorgungsspannung in Abhängigkeit von der erfassten Drehbewegung und/oder der erfassten Drehstellung des zweiten Impulsgebers (12) ein Sensorsignal an die Recheneinheit (18) ausgibt, dass die Recheneinheit (18) aus dem ausgelesenen momentanen Zählwert, der eine absolute Drehwinkelstellung mit einer groben Auflösung angibt, und dem Sensorsignal eine absolute Drehwinkelstellung mit feiner Auflösung ermittelt.

9. Sensorsystem nach Anspruch 8,
**dadurch gekennzeichnet,**
**dass** die absolute Drehwinkelstellung einen Wertebereich aufweist, der größer als 1,0 Umdrehungen ist.

10. Lenkantrieb (1), insbesondere Antrieb für eine Lenksäule eines Kraftfahrzeugs mit einem Elektromotor (3) und einem Sensorsystem (2) nach einem der Ansprüche 1 bis 9, wobei das Sensorsystem (2) zum Erfassen der Drehbewegung des Elektromotors (3) dient.

11. Lenkantrieb nach Anspruch 10,
**dadurch gekennzeichnet,**
**dass** der Elektromotor (3) einen aus mehreren Rotorpaketen (6A, 6B, 6C, 6D) umfassenden Rotor (6) aufweist, der als erster Impulsgeber (7) für das erste Sensorelement (9) dient.
